# EUROPEAN PATENT APPLICATION

(11) **EP 2 713 030 A1**
(43) Date of publication of application: **02.04.2014**
(21) Application number: 11864928.4
(22) Date of filing: 12.05.2011
(51) Int. Cl.: F02D 29/00

(54) **CONTROL DEVICE FOR VEHICLE**

(71) Applicant: Toyota Jidosha Kabushiki Kaisha, Toyota-shi, Aichi 471-8571 (JP)
(72) Inventor: OTSUBO Masaaki, Toyota-shi Aichi 471-8571 (JP)
(74) Representative: Albutt, Anthony John
(86) International application number: PCT/JP2011/060965
(87) International publication number: WO 2012/153419

(57) **Abstract**

In a vehicle where a manual transmission MT and a clutch device 6 are mounted, an engine rotational speed during a shift operation or at the start of the shift operation is maintained until a coupling operation for the clutch device MT is performed. This maintains the engine rotational speed as approximately the middle rotational speed between: a synchronous rotation speed after shifting gears in the case where a manual shift operation is downshifting operation, and a synchronous rotation speed after shifting gears in the case where the manual shift operation is upshifting operation. This reduces a deviation between a rotational speed of an input shaft IS and the engine rotational speed in the case where the manual shift operation is any of downshifting operation and upshifting operation. This reduces a negative effect on a power transmission system when the clutch device 6 is coupled.

## Description

### TECHNICAL FIELD

The present invention relates to a control apparatus for a vehicle with a manual transmission where a transmission gear is selected by a manual operation of a driver. Especially, the present invention relates to a countermeasure for reducing a negative effect on a power transmission system when a clutch device is coupled. In this description, an operation for selecting a transmission gear of a manual transmission by a driver is referred to as "a manual shift operation". An operation of the clutch device by the driver is referred to as "a clutch operation". A sequence of operations of "the manual shift operation" and "the clutch operation" is referred to as "a shift operation".

### BACKGROUND ART

Conventionally, in manual transmissions for vehicles as illustrated in Patent Literature 1 and Patent Literature 2 for example, a driver operates a shift lever (performs a manual shift operation) so as to select a transmission gear.

For example, a floor shift manual transmission with a shift lever on a floor in a passenger compartment includes the shift lever movable within a shift gate where a gate groove is formed. The gate groove extends in a right-left direction (a vehicle-width direction: hereinafter referred to also as a select operation direction) and a front-rear direction (a front-rear direction of a vehicle body: hereinafter referred to also as a shift operation direction). After a select operation in which the shift lever is operated along this gate groove in the select operation direction, a shift operation is performed to achieve shifting to a desired transmission gear in a transmission mechanism of the manual transmission. In the shift operation, the shift lever is operated in one direction of the shift operation directions. In a state where shifting to this transmission gear is achieved, a clutch operation (a depression release operation of a clutch pedal) is performed to couple the clutch device. This couples an engine and the transmission mechanism, changes an engine rotational speed with a transmission gear ratio of the shifted transmission gear, and outputs a rotary drive force to a driving wheel from the transmission mechanism.

Especially, the manual transmission has a feature that allows a manual shift operation to any transmission gear intended by the driver. That is, a high degree of freedom for selecting a transmission gear (selection of a transmission gear that has dependency on the intention of the driver) is a major feature of the manual transmission.

### CITATION LIST

### PATENT LITERATURE

PATENT LITERATURE 1: Japanese Unexamined Patent Application Publication No. 2009-103268
PATENT LITERATURE 2: Japanese Unexamined Patent Application Publication No. 2007-230271

### SUMMARY OF INVENTION

### TECHNICAL PROBLEM

However, as described above, when the driver operates the shift lever so as to shift a transmission gear of the transmission mechanism, the driver may make a mistake in the shift operation and perform shifting to a transmission gear unintended by the driver. This may provide a negative effect on the power transmission system including the clutch device.

In the following situation, shifting to the transmission gear unintended by the driver occurs. For example, in the case where the driver intends to upshift from the second gear to the third gear, the driver performs a shift operation to the first gear by mistake. For example, in a situation where the vehicle starts moving and accelerates, the driver performs upshifting while operating the shift lever at a comparatively fast operation speed. However, in the case where the driver attempts to upshift to the third gear but performs a shift operation to the first gear by mistake, the clutch device receives an excessive deceleration torque when the clutch device is coupled. This may provide a negative effect on the power transmission system including the clutch device.

Especially, in recent years, a transmission with a wider gear ratio and a higher gear ratio has been developed in order to improve a fuel consumption rate of the engine. This transmission is likely to cause the negative effect on the power transmission system as described above.

As a countermeasure to avoid this situation, in Patent Literature 2, shifting to the transmission gear is restricted in the case where a predicted rotational speed after the shift operation (for example, an input shaft rotational speed of the transmission) is equal to or more than a predetermined rotational speed. Specifically, in a gear position where excessive rotation may occur, a gate stopper extends. This mechanically prevents shifting (an operation of the shift lever) to the gear position.

However, this countermeasure cannot utilize the feature of the manual transmission, which is the high degree of freedom for selecting the transmission gear. Additionally, shifting to the transmission gear intended by the driver is not performed. This causes a feeling of strangeness.

As a technique to prevent the negative effect on the power transmission system due to the deceleration torque, the following control is possible. This control increases an engine rotational speed to a synchronous rotation speed of a low transmission gear side (what is called blipping) before the clutch is coupled. However, in the case where the manual shift operation is not downshifting but upshifting, the engine rotational speed before the clutch is coupled becomes tremendously higher than the input shaft rotational speed of the transmission. Accordingly, performing the above control (blipping control) ends up providing the negative effect on the power transmission system.

The present invention has been made in view of the above-described circumstances, and it is an object of the present invention to provide a control apparatus for a vehicle that reduces a negative effect on a power transmission system when a clutch device is coupled.

### SOLUTIONS TO THE PROBLEMS

### -Principle of Solution to the Problems-

A principle of a solution of the present invention devised in order to achieve the aforementioned object is that an engine rotational speed (a rotational speed of a drive source) during shift operation is held at the engine rotational speed before the shift operation is started or at the time when the shift operation is started. This prevents causing an excessive deviation between input shaft rotational speed of a manual transmission and engine rotational speed when shifting gears is achieved (when shifting gears is achieved in a clutch release state) in the case where a manual shift operation is any of downshifting operation and upshifting operation. This reduces a negative effect on a power transmission system when a clutch device is coupled.

### -Solution Means-

Specifically, the present invention is premised on a control apparatus for a vehicle that includes a clutch device and a manual transmission. The clutch device is configured to switch a coupled state and a release state to transmit and cut off a drive force from a drive source. The manual transmission is configured to select any of a plurality of transmission gears based on a manual shift operation by a driver when the clutch device is in the release state. The control apparatus for the vehicle further includes a rotational speed control unit configured to perform rotational speed control during shifting gears so as to control the drive source to set a rotational speed of the drive source at a time when a shift operation is started or before a shift operation is started as a target rotational speed at least during a period where the clutch device in the release state is operated to the coupled state among operation periods of the clutch device and the manual transmission.

According to this specified matter, the rotational speed control (the rotational speed control during shifting gears) for the drive source is performed so as to set the rotational speed of the drive source at the time when the shift operation is started or before the shift operation is started as the target rotational speed during the shift operation by the driver. In the rotational speed control, the rotational speed of the drive source coincides with the target rotational speed at least during the period where the clutch device in the release state is operated to the coupled state. In this case, the rotational speed of the drive source is maintained as approximately the middle rotational speed between: a synchronous rotation speed after shifting gears in the case where the manual shift operation is downshifting operation, and a synchronous rotation speed after shifting gears in the case where the manual shift operation is upshifting operation. This does not cause a large deviation between input shaft rotational speed of the manual transmission and rotational speed of the drive source after the manual shift operation in the case where the manual shift operation is any of downshifting operation and upshifting operation. This reduces a negative effect on the power transmission system when the clutch device is coupled.

The following configurations are examples of specific configurations of the rotational speed control unit. That is, the rotational speed control unit is configured to control the drive source a rotational speed of the drive source at a time when a shift operation is started or before a shift operation is started as a target rotational speed during a period from a start of a shift operation to set the clutch device in the release state until the clutch device becomes the coupled state.

This configuration continuously maintains the rotational speed of the drive source at the target rotational speed from the start of the shift operation. That is, this configuration provides smaller change in engine sound and smaller change in engine torque compared with the case where the rotational speed is changed only when the clutch device is coupled (for example the rotational speed of the drive source that is reduced once during the manual shift operation is increased when the clutch device is coupled). This reduces a feeling of strangeness of the driver and other occupants in the vehicle so as to prevent degradation in drivability.

In the configuration, an output of the drive source required for holding the rotational speed of the drive source at the target rotational speed is compared with an output of the drive source required by the driver so as to control to set the higher output to the output of the drive source. That is, in the case where a required output for the drive source becomes larger because of the larger depression amount of the accelerator pedal by the driver for example, the rotational speed control unit does not perform the rotational speed control during shifting gears so as to control for obtaining the output of the drive source required by the driver. This allows output control for the drive source corresponding to the request from the driver.

Additionally, correction of the target rotational speed is also within the technical scope of the present invention. That is, the target rotational speed of the drive source is corrected to a decreasing side in a case where an output shaft rotational speed of the manual transmission or a vehicle speed decreases during a period from a start of a shift operation to set the clutch device in the release state until the clutch device becomes the coupled state. During the above period, the target rotational speed of the drive source is corrected to an increasing side in a case where an output shaft rotational speed of the manual transmission or a vehicle speed increases.

This allows appropriate adjustment of the target rotational speed of the drive source following change in output shaft rotational speed of the manual transmission and change in vehicle speed. For example, this does not cause a large deviation between input shaft rotational speed of the manual transmission and rotational speed of the drive source after the manual shift operation even in the case where the output shaft rotational speed of the manual transmission and the vehicle speed significantly change during the manual shift operation. This reduces a negative effect on the power transmission system when the clutch device is coupled.

In the configuration, the rotational speed control during shifting gears is performed only when a shift operation is performed in a state where a transmission gear with a second highest transmission gear ratio is selected among the plurality of transmission gears of the manual transmission.

This control considers a situation where a large negative effect is especially likely to occur on the power transmission system when the clutch device is coupled. That is, an excessive deceleration torque is input to the clutch device when the clutch device is coupled in the case where the shift operation to the first gear is performed by mistake when upshifting from the second gear to the third gear is intended to be performed in the manual transmission. This provides a negative effect on the power transmission system including the clutch device. This is because a gear ratio difference between the first gear and the second gear is larger than a gear ratio difference between other adjacent transmission gears. As described above, the rotational speed control during shifting gears is performed only when the shift operation is performed from the second gear (a transmission gear with the second highest transmission gear ratio). With other transmission gears, the rotational speed control during shifting gears is not performed. This prevents a feeling of strangeness when the shift operation is performed from the transmission gear other than the second gear (a feeling of strangeness due to the rotational speed of the drive source that does not correspond to the depression amount of the accelerator pedal), and reduces a negative effect on the power transmission system when the shift operation is performed from the second gear.

Execution conditions for the rotational speed control during shifting gears include a condition where the warming-up of the vehicle is completed and a condition where the vehicle speed is equal to or more than a predetermined value. In the case where the vehicle is not in the warm-up completion state, this state may cause degraded controllability of the rotational speed of the internal combustion engine. Accordingly, the execution conditions for the rotational speed control during shifting gears include the condition where the warming-up of the vehicle is completed. In the case where the vehicle is stopped or at a comparatively low vehicle speed, this state has low possibility to provide a negative effect on the power transmission system when the clutch device is coupled. Accordingly, the execution conditions for the rotational speed control during shifting gears include the condition where the vehicle speed is equal to or more than a predetermined value.

### ADVANTAGEOUS EFFECTS OF INVENTION

The present invention controls the drive source to set the rotational speed of the drive source at a time when the shift operation is started or before the shift operation is started as the target rotational speed during the shift operation. This prevents an excessive deviation between input shaft rotational speed of the manual transmission and engine rotational speed when shifting gears is completed in the case where the manual shift operation is any of downshifting operation and upshifting operation. This reduces a negative effect on the power transmission system when the clutch device is coupled.

### BRIEF DESCRIPTION OF DRAWINGS

[Fig. 1] FIG. 1 is a schematic configuration diagram of a power train mounted on a vehicle according to an embodiment.
[Fig. 2] FIG. 2 is a schematic configuration diagram illustrating an engine and an air intake and exhaust system for the engine.
[Fig. 3] FIG. 3 is a schematic configuration diagram of a clutch device.
[Fig. 4] FIG. 4 is a schematic diagram of a shift pattern of a six-speed manual transmission.
[Fig. 5] FIG. 5 is a block diagram illustrating a configuration of a control system such as an ECU.
[Fig. 6] FIG. 6 is a flowchart illustrating a procedure of an engine control during shifting gears.
[Fig. 7] FIG. 7 is a graph illustrating changes in input shaft rotational speed and engine rotational speed in the case where the engine control during shifting gears is performed during a shift operation from the second gear.
[Fig. 8] FIG. 8 is a graph illustrating exemplary changes in input shaft rotational speed and engine rotational speed in the case where downshifting is performed from the second gear to the first gear in a conventional technique.
[Fig. 9] FIG. 9 is a graph illustrating exemplary changes in input shaft rotational speed and engine rotational speed in the case where upshifting is performed from the second gear to the third gear in the conventional technique where automatic blipping is performed during shifting gears.

### DESCRIPTION OF EMBODIMENTS

Hereinafter, a description will be given of an embodiment of the present invention by referring to the accompanying drawings. A description will be given of this embodiment where the present invention is applied to a front-engine rear-drive (FR) vehicle.

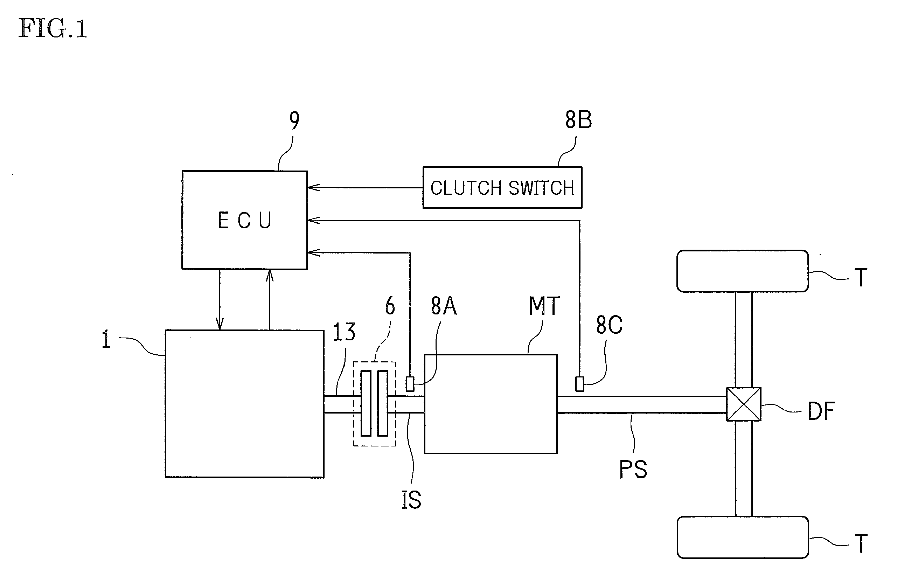

FIG. 1 illustrates a schematic configuration of a power train mounted on a vehicle according to this embodiment. In FIG. 1, a reference numeral 1 denotes an engine (a drive source). A reference sign MT denotes a manual transmission. A reference numeral 6 denotes a clutch device. A reference numeral 9 denotes an electronic control unit (ECU).

In the power train illustrated in FIG. 1, a rotary drive force (a torque) generated at the engine 1 is input to the manual transmission MT via the clutch device 6. The manual transmission MT allows shifting gears at any transmission gear ratio (a transmission gear ratio of a transmission gear selected with a shift lever operation by the driver). Subsequently, the rotary drive force is transmitted to right and left rear wheels (driving wheels) T and T via a propeller shaft PS and a differential gear DF. Here, the manual transmission MT mounted on the vehicle according to this embodiment is a synchromesh manual transmission with six forward gears and one reverse gear.

Hereinafter, descriptions will be given of an overall configuration of the engine 1, the clutch device 6, and a control system.

### -Overall Configuration of Engine 1-

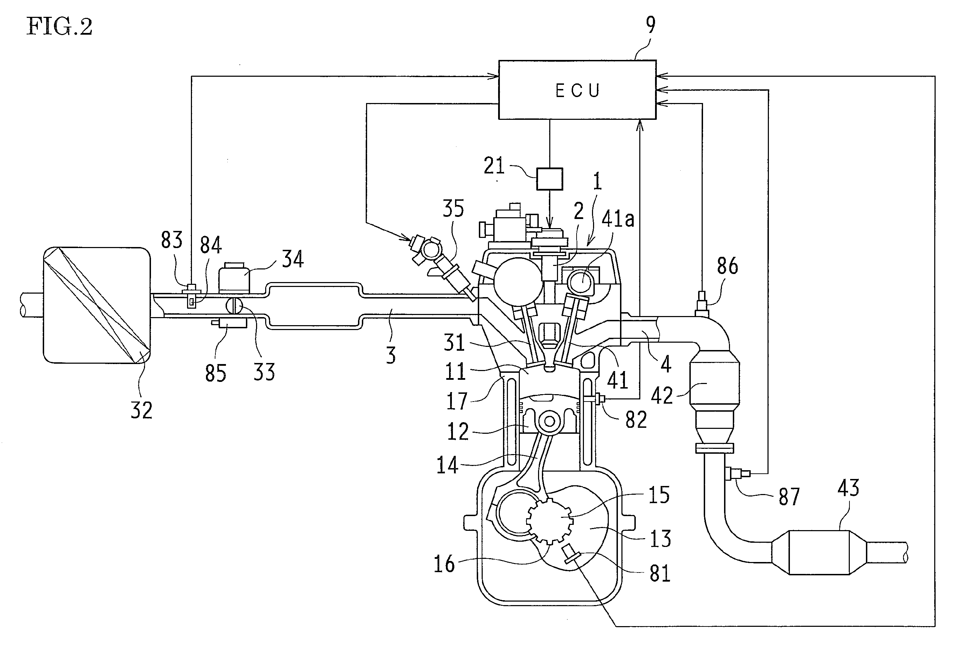

FIG. 2 is a schematic configuration diagram illustrating the engine 1 and an air intake and exhaust system for the engine 1. FIG. 2 illustrates a configuration of one cylinder of the engine 1 only.

The engine 1 according to this embodiment is, for example, a four-cylinder gasoline engine. The engine 1 includes a piston 12, which forms a combustion chamber 11, and a crankshaft 13, which is an output shaft. The piston 12 is coupled to the crankshaft 13 via a connecting rod 14. Reciprocation of the piston 12 is transformed into rotation of the crankshaft 13 by the connecting rod 14.

On the crankshaft 13, a signal rotor 15 is mounted. The signal rotor 15 has an outer peripheral surface with a plurality of the protrusions (teeth) 16. Adjacent to a side portion of this signal rotor 15, a crank position sensor (an engine rotational speed sensor) 81 is disposed. The crank position sensor 81 is, for example, an electromagnetic pick-up. The crank position sensor 81 generates a pulse-shaped signal (an output pulse) corresponding to the protrusions 16 of the signal rotor 15 when the crankshaft 13 rotates.

The engine 1 includes a cylinder block 17 with a water temperature sensor 82 for detecting an engine water temperature (a cooling water temperature).

The combustion chamber 11 of the engine 1 includes a spark plug 2. Ignition timing of the spark plug 2 is adjusted by an ignitor 21. The ignitor 21 is controlled by the ECU 9.

The combustion chamber 11 of the engine 1 is coupled to an intake passage 3 and an exhaust passage 4. Between the intake passage 3 and the combustion chamber 11, an intake valve 31 is disposed. Opening and closing drives of the intake valve 31 allows communication or cutting off between the intake passage 3 and the combustion chamber 11. Between the exhaust passage 4 and the combustion chamber 11, an exhaust valve 41 is disposed. Opening and closing drives of the exhaust valve 41 allows communication or cutting off between the exhaust passage 4 and the combustion chamber 11. Opening and closing drives of the intake valve 31 and the exhaust valve 41 are performed by respective rotation of an intake camshaft and an exhaust camshaft 41 a. Rotation of the crankshaft 13 is transmitted to the intake camshaft and the exhaust camshaft 41 a.

The intake passage 3 includes an air cleaner 32, a hot-wire air flow meter 83, an intake air temperature sensor 84 (built in the air flow meter 83), and an electrically-controlled throttle valve 33. The throttle valve 33 adjusts an air intake quantity of the engine 1. The throttle valve 33 is driven by a throttle motor 34. A degree of opening of the throttle valve 33 is detected by a throttle position sensor 85.

The intake passage 3 includes an injector 35 for fuel injection. The injector 35 receives a fuel supplied from a fuel tank at a predetermined pressure by a fuel pump. This fuel is injected in the intake passage 3. The injected fuel is mixed with intake air to make air-fuel mixture. Subsequently, the air-fuel mixture is introduced to the combustion chamber 11 of the engine 1. The air-fuel mixture (fuel + air) introduced to the combustion chamber 11 undergoes a compression stroke of the engine 1. Subsequently, the air-fuel mixture is ignited by the spark plug 2 for burning. The burning of the air-fuel mixture inside of the combustion chamber 11 allows reciprocation of the piston 12 so as to rotate the crankshaft 13.

The exhaust passage 4 of the engine 1 includes two three-way catalysts 42 and 43. These three-way catalysts 42 and 43 each have an O₂ storage function (an oxygen storage function) for storing (absorbing) oxygen. The oxygen storage function allows purifying HC, CO, and NOx even in the case where the air-fuel ratio is deviated from a stoichiometric air-fuel ratio at a certain level.

In the exhaust passage 4, an air-fuel ratio sensor (A/F sensor) 86 is disposed at an upstream side of the upstream-side three-way catalyst 42. At an upstream side of the downstream-side three-way catalyst 43, an oxygen sensor (O₂ sensor) 87 is disposed.

### -Clutch Device 6-

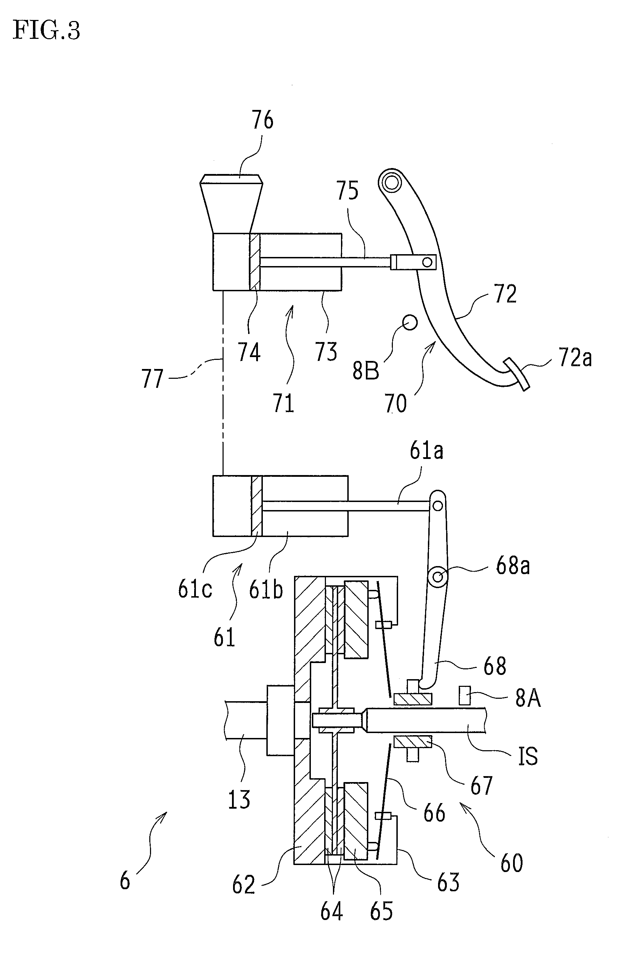

FIG. 3 illustrates a schematic configuration of the clutch device 6. As illustrated in FIG. 3, the clutch device 6 includes a clutch mechanism portion 60, a clutch pedal 70, a clutch master cylinder 71, and a clutch release cylinder 61.

The clutch mechanism portion 60 is interposed between the crankshaft 13 and the input shaft IS of the manual transmission MT (see FIG. 1). The clutch mechanism portion 60 transmits and cuts off a drive force from the crankshaft 13 to the input shaft IS, and changes the transmission state of the drive force. Here, the clutch mechanism portion 60 is configured as a dry type single plate friction clutch. The configuration of the clutch mechanism portion 60 may employ another configuration.

Specifically, the crankshaft 13 is an input shaft of the clutch mechanism portion 60. On the crankshaft 13, a flywheel 62 and a clutch cover 63 are mounted to integrally rotate. On the other hand, the input shaft IS is an output shaft of the clutch mechanism portion 60. The input shaft IS is splined to a clutch disc 64. This allows the clutch disc 64 to slide along an axial direction (the right-left direction in FIG. 3) while integrally rotating with the input shaft IS. Between the clutch disc 64 and the clutch cover 63, a pressure plate 65 is disposed. The pressure plate 65 has contact with an outer end portion of a diaphragm spring 66. The diaphragm spring 66 biases the pressure plate 65 to the flywheel 62 side.

On the input shaft IS, a release bearing 67 is mounted to slide along the axial direction. Adjacent to the release bearing 67, a release fork 68 is turnably supported by a shaft 68a. The release fork 68 includes one end portion (a lower end portion in FIG. 3) abutting on the release bearing 67. The release fork 68 includes the other end portion (an upper end portion in FIG. 3) coupled to one end portion (a right end portion in FIG. 3) of the rod 61a of the clutch release cylinder 61. The release fork 68 is operated such that coupling and releasing actions of the clutch mechanism portion 60 are performed.

In the configuration of the clutch pedal 70, a lower end portion of a pedal lever 72 and a pedal portion 72a as a depressed portion are integrated together. A clutch pedal bracket (not shown) supports a portion close to the upper end of the pedal lever 72 to turn around the horizontal axis. The clutch pedal bracket is mounted on a dash panel dividing the inside of the passenger compartment and the inside of the engine room. The pedal lever 72 receives a biasing force in a turning direction toward a near side (the driver side) by a pedal return spring (not shown). The driver performs a depressing operation of the pedal portion 72a against the biasing force of the pedal return spring so as to perform a releasing action of the clutch mechanism portion 60. The driver releases the depressing operation of the pedal portion 72a so as to perform a coupling action of the clutch mechanism portion 60 (these releasing and coupling actions will be described later).

The clutch master cylinder 71 has a configuration where a piston 74 and similar member are embedded inside of a cylinder body 73. The piston 74 is coupled to one end portion (a left end portion in FIG. 3) of a rod 75. The other end portion (a right end portion in FIG. 3) of the rod 75 is coupled to the middle portion of the pedal lever 72. The cylinder body 73 includes an upper portion where a reservoir tank 76 is disposed. The reservoir tank 76 supplies clutch fluid (oil) as actuating fluid into the cylinder body 73.

The clutch master cylinder 71 receives an operating force by the depressing operation of the clutch pedal 70 by the driver. This moves the piston 74 inside of the cylinder body 73 so as to generate a hydraulic pressure. At this time, a depressing operation force by the driver is transmitted from the middle portion of the pedal lever 72 to the rod 75 so as to generate a hydraulic pressure inside of the cylinder body 73. The hydraulic pressure generated at the clutch master cylinder 71 is changed corresponding to a stroke position of the piston 74 inside of the cylinder body 73.

The hydraulic pressure generated by the clutch master cylinder 71 is transmitted to the clutch release cylinder 61 by oil inside of the hydraulic pipe 77.

Similarly to the clutch master cylinder 71, the clutch release cylinder 61 has a configuration where a piston 61 c and similar member are embedded inside of a cylinder body 61b. The piston 61c is coupled to the other end portion (the left end portion in FIG. 3) of the rod 61a. The stroke position of the piston 61c is changed corresponding to a hydraulic pressure received at the piston 61 c.

In the clutch device 6, a release fork 68 is operated corresponding to a hydraulic pressure inside of the clutch release cylinder 61. This performs coupling and releasing actions of the clutch mechanism portion 60. In this case, a clutch coupling force (a clutch transmission capacity) of the clutch mechanism portion 60 is changed corresponding to a depressing operation amount of the clutch pedal 70.

Specifically, the depressing operation amount of the clutch pedal 70 becomes large, and oil is supplied from the clutch master cylinder 71 to the clutch release cylinder 61 so as to increase a hydraulic pressure inside of the clutch release cylinder 61. This moves the piston 61c and the rod 61 a rightward in FIG. 3, and the release fork 68 coupled to the rod 61 a is turned so as to press the release bearing 67 toward the flywheel 62 side. Additionally, movement of the release bearing 67 in the same direction allows elastic distortion of an inner end portion of the diaphragm spring 66 in the same direction. Along with this movement, the biasing force to the pressure plate 65 becomes small in the diaphragm spring 66. Accordingly, the pressure plate 65, the clutch disc 64, and the flywheel 62 are coupled while sliding in a half-clutch state. Additionally, in the case where the biasing force becomes small, the pressure plate 65, the clutch disc 64, and the flywheel 62 are separated from one another, and the clutch mechanism portion 60 becomes a release state. This cuts off a power transmission from the engine 1 to the manual transmission MT. Here, in the case where the depressing operation amount of the clutch pedal 70 exceeds a predetermined amount, the clutch mechanism portion 60 is completely cut off in a complete release state (a state where the clutch transmission capacity is 0%).

On the other hand, in the case where the depressing operation amount of the clutch pedal 70 becomes small and the oil returns from the clutch release cylinder 61 to the clutch master cylinder 71 so as to reduce the hydraulic pressure inside of the clutch release cylinder 61, the piston 61c and the rod 61 a move in the left direction in FIG. 3. This turns the release fork 68 so as to move the release bearing 67 to a side separated from the flywheel 62. Along with this movement, the biasing force to the pressure plate 65 increases at the outer end portion of the diaphragm spring 66. At this time, respective friction forces, that is, respective clutch coupling forces are generated between the pressure plate 65 and the clutch disc 64 and between the clutch disc 64 and the flywheel 62. In the case where the clutch coupling force becomes large, the clutch mechanism portion 60 is coupled so as to integrally rotate the pressure plate 65, the clutch disc 64, and the flywheel 62. This directly couples the engine 1 and the manual transmission MT together. Here, in the case where the depressing operation amount of the clutch pedal 70 becomes below a predetermined amount, the clutch mechanism portion 60 is completely coupled in a complete coupling state (a state where the clutch transmission capacity is 100%).

Close to the pedal lever 72, a clutch switch 8B is disposed. The clutch switch 8B detects a state where the depression amount of the pedal lever 72 by the driver has reached a predetermined amount. That is, the clutch switch 8B sends an ON signal at the point when the depression amount of the pedal lever 72 has reached the predetermined amount after the start of the shift operation by the driver. The clutch switch 8B stops sending the ON signal at the point when the depression amount of the pedal lever 72 returns to the predetermined amount after completion of an operation of a shift lever L by the driver. That is, sending and stopping of the ON signal from the clutch switch 8B allows detection of the start and completion of the shift operation.

Here, two clutch switches may be disposed to improve detection accuracy of the start and the completion of the shift operation. That is, the following clutch switches may be disposed. One clutch switch sends the ON signal in the case where the pedal lever 72 is depressed to a position where the clutch mechanism portion 60 becomes the complete release state. The other clutch switch sends the ON signal in the case where the depression of the pedal lever 72 is released to a position where the clutch mechanism portion 60 becomes the complete coupling state. These signals allow detection of the start and the completion of the shift operation.

Additionally, close to the input shaft IS, an input rotational speed sensor 8A is disposed. The input rotational speed sensor 8A detects a rotational speed (an input shaft rotational speed or an input shaft rotational velocity) of the input shaft IS to output a rotational velocity signal to the ECU 9 (see FIG. 1).

Close to an output shaft (a shaft coupled to the propeller shaft PS) of the manual transmission MT, an output rotational speed sensor 8C (see FIG. 1) is disposed. The output rotational speed sensor 8C detects a rotational speed (an output shaft rotational speed or an output shaft rotational velocity) of the output shaft to output a rotational velocity signal to the ECU 9. The rotational speed of the output shaft detected by the output rotational speed sensor 8C is divided by a gear ratio (the final gear ratio) of the differential gear DF so as to obtain a rotational speed of the rear wheel T. This allows calculation of a vehicle speed.

### -Shift Pattern-

Next, a description will be given of a shift pattern (a shape of the shift gate) of the shift gate, which is disposed on the floor of the passenger compartment, and guides movement of the shift lever.

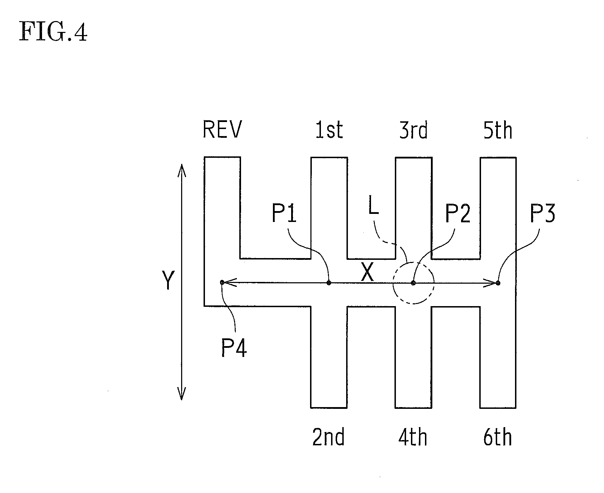

FIG. 4 illustrates a schematic shift pattern of a six-speed manual transmission MT according to this embodiment. The shift lever L illustrated by a two-dot chain line in FIG. 4 is constituted to allow a select operation in a direction illustrated by an arrow X in FIG. 4 and a shift operation in a direction illustrated by an arrow Y perpendicular to the select operation direction.

In the select operation direction, a first gear-second gear select position P1, a third gear-fourth gear select position P2, a fifth gear-sixth gear select position P3, and a reverse select position P4 are aligned in one row.

The shift operation (the operation in the arrow Y direction) in the first gear-second gear select position P1 allows moving the shift lever L to the first gear position 1st or the second gear position 2nd. In the case where the shift lever L is operated to the first gear position 1st, a first synchromesh mechanism in the transmission mechanism of the manual transmission MT operates to a side for completion of shifting to the first gear so as to achieve shifting to the first gear. In the case where the shift lever L is operated to the second gear position 2nd, the first synchromesh mechanism operates to a side for completion of shifting to the second gear so as to achieve shifting to the second gear.

Similarly, the shift operation in the third gear-fourth gear select position P2 allows moving the shift lever L to the third gear position 3rd or the fourth gear position 4th. In the case where the shift lever L is operated to the third gear position 3rd, a second synchromesh mechanism in the transmission mechanism of the manual transmission MT operates to a side for completion of shifting to the third gear so as to achieve shifting to the third gear. In the case where the shift lever L is operated to the fourth gear position 4th, the second synchromesh mechanism operates to a side for completion of shifting to the fourth gear so as to achieve shifting to the fourth gear.

The shift operation in the fifth gear-sixth gear select position P3 allows moving the shift lever L to the fifth gear position 5th or the sixth gear position 6th. In the case where the shift lever L is operated to the fifth gear position 5th, a third synchromesh mechanism in the transmission mechanism of the manual transmission MT operates to a side for completion of shifting to the fifth gear so as to achieve shifting to the fifth gear. In the case where the shift lever L is operated to the sixth gear position 6th, the third synchromesh mechanism operates to a side for completion of shifting to the sixth gear so as to achieve shifting to the sixth gear.

Additionally, the shift operation in the reverse select position P4 allows moving the shift lever L to the reverse position REV. In the case where the shift lever L is operated to the reverse position REV, all the synchromesh mechanisms become a neutral state and a reverse idler gear in the transmission mechanism of the manual transmission MT operates so as to achieve shifting to the reverse gear.

### -Control System-

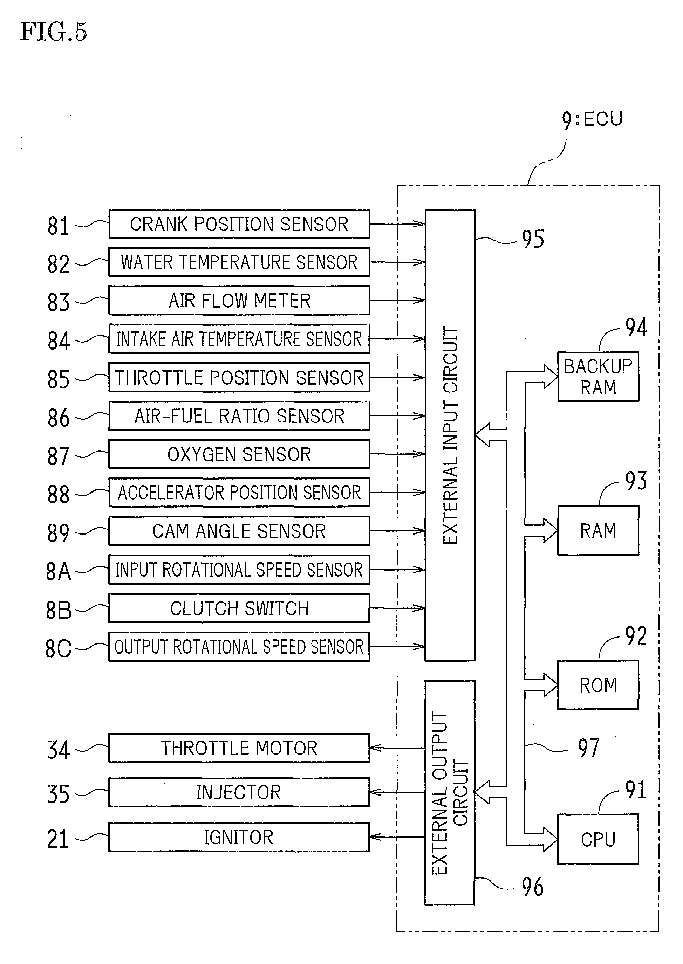

Various controls for the operating state of the engine 1 and similar parameter are controlled by the ECU 9. As illustrated in FIG. 5, the ECU 9 includes a central processing unit (CPU) 91, a read only memory (ROM) 92, a random access memory (RAM) 93, a backup RAM 94, and similar.

The ROM 92 stores, for example, various control programs and maps referenced when the various control programs are executed. The CPU 91 executes arithmetic processes based on the various control programs and the maps stored in the ROM 92. The RAM 93 is a memory that temporarily stores results of the arithmetic operations in the CPU 91, data input from respective sensors, and similar data. The backup RAM 94 is a non-volatile memory that stores data to be saved and similar data when the engine 1 is stopped.

The ROM 92, the CPU 91, the RAM 93, and the backup RAM 94 are coupled together via a bus 97, and are coupled to an external input circuit 95 and an external output circuit 96.

In addition to the crank position sensor 81, the water temperature sensor 82, the air flow meter 83, the intake air temperature sensor 84, the throttle position sensor 85, the air-fuel ratio sensor 86, and the oxygen sensor 87, the external input circuit 95 is coupled to an accelerator position sensor 88, a cam angle sensor 89, the input rotational speed sensor 8A, the clutch switch 8B, the output rotational speed sensor 8C, and similar sensor. The accelerator position sensor 88 detects a degree of opening of an accelerator pedal operated by the driver. The cam angle sensor 89 detects a rotation position of the camshaft. Configurations and functions of the respective sensors are well-known, and will not be further elaborated here.

On the other hand, the external output circuit 96 is coupled to the throttle motor 34, the injector 35, the ignitor 21, and similar. The throttle motor 34 drives the throttle valve 33.

The ECU 9 executes various controls of the engine 1 based on the detection signals of the various sensors. For example, the controls to be executed are well-known controls such as ignition timing control for the spark plug 2, fuel injection control of the injector 35 (air-fuel ratio feedback control based on respective outputs of the air-fuel ratio sensor 86 and the oxygen sensor 87), and drive control for the throttle motor 34. The ECU 9 performs "engine control during shifting gears", which will be described later, so as to control the throttle motor 34 and similar such that the engine rotational speed during shifting gears coincides with a predetermined target rotational speed.

### -Engine Control During Shifting Gears-

Next, a description will be given of the engine control during shifting gears (the rotational speed control during shifting gears in the present invention) as a characteristic action of this embodiment. The engine control during shifting gears controls the engine rotational speed when the driver performs a shift operation. An outline of the engine control during shifting gears will be described. When the driver starts a shift operation, the engine rotational speed is set as a target engine rotational speed at the time the shift operation is started (for example, at the time the depressing operation of the clutch pedal 70 is started). Subsequently, the target engine rotational speed is maintained until the shift operation is terminated (until the clutch device 6 is coupled) (which is the rotational speed control during shifting gears performed by the rotational speed control unit).

More specifically, as a shift operation by the driver, a release operation of the clutch device 6 (a depressing operation of the clutch pedal 70), a manual shift operation of the shift lever L (the select operation and the shift operation described above), and a coupling operation of the clutch device 6 (a depression release operation of the clutch pedal 70) are performed in this order. The engine rotational speed at the time when the release operation of the clutch device 6 is started (the engine rotational speed calculated based on the output signal of the crank position sensor 81) is stored. The degree of opening of the throttle valve 33 is adjusted to maintain the stored engine rotational speed during the manual shift operation of the shift lever L and during the coupling operation of the clutch device 6. That is, the control of the throttle motor 34 adjusts the degree of opening of the throttle valve 33. The air-fuel ratio feedback control above provides control for obtaining a fuel injection quantity from the injector 35 corresponding to the degree of opening (the air intake quantity) of the throttle valve 33 after this adjustment. This holds the engine rotational speed at a rotational speed at the time when the shift operation is started (at the time when the release operation of the clutch device 6 is performed).

The target engine rotational speed may be the engine rotational speed immediately before the shift operation is started. That is, the engine rotational speed immediately before the depressing operation of the clutch pedal 70 along with the start of the shift operation is started is stored. This rotational speed is set as the target engine rotational speed to perform adjustment for the degree of opening of the throttle valve 33 and similar control.

In order to improve reliability of the engine rotational speed control for example,
execution conditions for the engine control during shifting gears include a condition where "the vehicle (especially the engine) is in a warm-up completion state", a condition where "the vehicle is running", and a condition where "the clutch device 6 is operated". That is, in the case where the vehicle is not in the warm-up completion state, this state causes degraded controllability of the engine rotational speed based on the degree of opening of the throttle valve 33. Accordingly, the execution conditions for the engine control during shifting gears include the condition where "the vehicle is in the warm-up completion state". In the case where the vehicle is stopped, this state has low possibility to provide a negative effect on the power transmission system when the clutch device 6 is coupled along with the start of moving the vehicle. Accordingly, the execution conditions for the engine control during shifting gears include the condition where "the vehicle is running". Additionally, in the case where the shift operation is not performed, change in engine rotational speed may provide a feeling of strangeness to the driver or degrade drivability. Accordingly, the execution conditions for the engine control during shifting gears include the condition where "the clutch device 6 is operated".

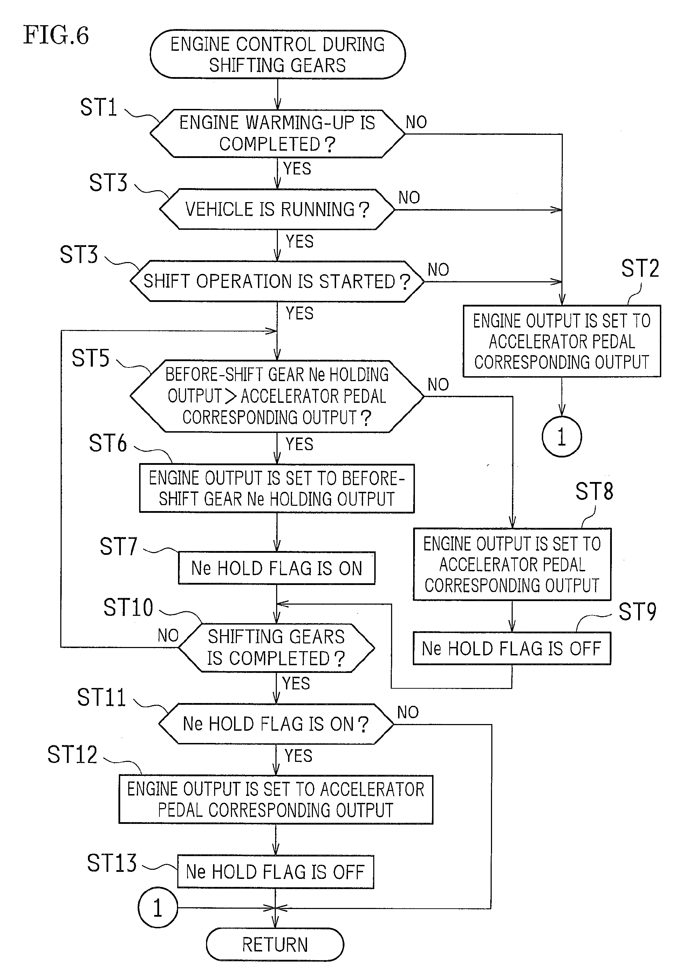

Hereinafter, a description will be given of a specific control procedure of the engine control during shifting gears. FIG. 6 is a flowchart illustrating a procedure of the engine control during shifting gears. The flowchart illustrated in FIG. 6 is executed after the ON operation of the ignition switch every few msec or for each predetermined rotation angle of the crankshaft 13.

First, in step ST1, it is determined whether or not warming-up of the engine 1 is completed. This determination is performed based on the engine water temperature detected by the water temperature sensor 82. The reason for performing this determination is as described above.

In the case where the warming-up of the engine 1 is not completed and determination is made as NO in step ST1, the process proceeds to step ST2. Subsequently, control for the throttle motor 34 and control for the injector 35 along with this control for throttle motor 34 are performed to obtain the engine output as an output corresponding to the current depression amount of the accelerator pedal (hereinafter referred to as "an accelerator pedal corresponding output"). That is, the throttle motor 34 is driven to increase the degree of opening of the throttle valve 33 as the accelerator position (the depression amount of the accelerator pedal) detected by the accelerator position sensor 88 becomes larger. Along with this increase, the fuel injection quantity from the injector 35 is increased. That is, the engine output required by the driver is obtained.

On the other hand, in the case where the warming-up of the engine 1 is completed and determination is made as YES in step ST1, the process proceeds to step ST3. Subsequently, it is determined whether or not the vehicle is running. This determination is performed based on the output of the output rotational speed sensor 8C. The reason for performing this determination is also as described above.

In the case where the vehicle is not running, that is, in a stop state and determination is made as NO in step ST3, the process proceeds to step ST2. Subsequently, the control of the throttle motor 34 and similar control are performed to set the engine output to the accelerator pedal corresponding output. For example, in the case where the degree of opening of the accelerator pedal is "0", the control of the throttle motor 34 and similar control are performed to set the throttle position to approximately "0".

On the other hand, in the case where the vehicle is running and determination is made as YES in step ST3, the process proceeds to step ST4. Subsequently, it is determined whether or not the shift operation is started. That is, it is determined whether or not the clutch device 6 is released. Specifically, it is determined whether or not the clutch device 6 is released (whether or not the clutch mechanism portion 60 is released based on the depressing operation of the pedal lever 72 by the driver) based on the output signal from the clutch switch 8B. In the case where the ON signal is sent from the clutch switch 8B, the clutch device 6 becomes the release state and the shift operation is determined to be started.

In the case where the shift operation is not started and determination is made as NO in step ST4, the process proceeds to step ST2. Subsequently, the control of the throttle motor 34 and similar control are performed to set the engine output to the accelerator pedal corresponding output.

On the other hand, in the case where the shift operation is started and determination is made as YES in step ST4, the process proceeds to step ST5. Subsequently, a before-shift gear Ne (the engine rotational speed before shifting gear) holding output is compared with the accelerator pedal corresponding output (the output of the drive source required by the driver) so as to determine whether or not the before-shift gear Ne holding output is larger than the accelerator pedal corresponding output. Here, the before-shift gear Ne holding output is an engine output for holding the engine rotational speed at the time when the shift operation is started (at the time when the determination is made as YES in step ST4). The before-shift gear Ne holding output is obtained by arithmetic operation or by referring to a required engine output map and similar method corresponding to displacement of the engine 1, the number of cylinders, and similar parameter. The required engine output map is preliminarily made by experiment and simulation, for example.

In the case where the before-shift gear Ne holding output is larger than the accelerator pedal corresponding output and determination is made as YES in step ST5, the process proceeds to step ST6. Subsequently, the control of the throttle motor 34 and similar control are performed to set the engine output to the before-shift gear Ne holding output. That is, the degree of opening of the throttle valve 33 and the fuel injection quantity from the injector 35 are held and corrected even in the case where the depression amount (the accelerator position) of the accelerator pedal by the driver decreases along with the shift operation. Accordingly, the engine output is held or adjusted so as to maintain the engine rotational speed (maintain the engine rotational speed at the point when the shift operation is started). After this control is started, the process proceeds to step ST7. Subsequently, an Ne hold flag preliminarily stored in the ECU 9 is set to ON.

On the other hand, in the case where the accelerator pedal corresponding output is equal to or more than the before-shift gear Ne holding output and determination is made as NO in step ST5, the process proceeds to step ST8. The throttle motor 34 and the injector 35 are controlled to set the engine output to the accelerator pedal corresponding output. That is, in the case where the accelerator pedal corresponding output is equal to or more than the before-shift gear Ne holding output because of a large depression amount (accelerator position) of the accelerator pedal by the driver, the throttle motor 34 and the injector 35 are controlled to obtain the engine output corresponding to the depression amount of the accelerator pedal. This situation is assumed as follows for example. The driver intends to perform downshifting operation. Additionally, the depressing operation (blipping) of the accelerator pedal is performed such that the engine rotational speed coincides with the synchronous rotation speed after the downshifting operation so as to increase the engine rotational speed.

The process proceeds to step ST9 after the control for setting the engine output to the accelerator pedal corresponding output is started as described above. Subsequently, the Ne hold flag is reset to be OFF.

The process proceeds to step ST10 in a state where the controls of the engine output (the control for setting the engine output to the before-shift gear Ne holding output in step ST6 or the control for setting the engine output to the accelerator pedal corresponding output in step ST8) as described above. Subsequently, it is determined whether or not the shift operation is completed. That is, it is determined whether or not the clutch device 6 is coupled. Specifically, it is determined whether or not the clutch device 6 is coupled based on the output signal of the clutch switch 8B (whether or not the clutch mechanism portion 60 is coupled based on the depression release operation of the pedal lever 72 by the driver). Here, in the case where the clutch switch 8B stops sending the ON signal, the clutch device 6 becomes the coupled state and it is determined that shifting gears is completed.

In the case where shifting gears is not completed and determination is made as NO in step ST10, the process returns to step ST5. Subsequently, the before-shift gear Ne holding output is compared with the accelerator pedal corresponding output. At this time, even in the case where the before-shift gear Ne holding output is larger than the accelerator pedal corresponding output and the engine output is controlled to coincide with the before-shift gear Ne holding output in the previous determination in step ST5, but in the case where the depression amount of the accelerator pedal by the driver becomes large in the middle of shifting gears and the accelerator pedal corresponding output becomes equal to or more than the before-shift gear Ne holding output, determination is made as NO in step ST5 and the process proceeds to step ST8. Subsequently, the throttle motor 34 and the injector 35 are controlled to set the engine output to the accelerator pedal corresponding output.

In the case where shifting gears is completed and determination is made as YES in step ST10, the process proceeds to step ST11. Subsequently, it is determined whether or not the Ne hold flag is set to ON, that is, whether or not the current engine output is controlled as the before-shift gear Ne holding output.

In the case where the Ne hold flag is set to ON and determination is made as YES in step ST11, the process proceeds to step ST12. Subsequently, the throttle motor 34 and the injector 35 are controlled to set the engine output to the accelerator pedal corresponding output. Subsequently, the Ne hold flag is reset to OFF in step ST13. That is, the control for setting the engine output to the before-shift gear Ne holding output is released. The control returns to a normal engine output control such as obtaining an engine output corresponding to the depression amount of the accelerator pedal.

On the other hand, in the case where determination is made as NO in step ST11, that is, in the case where the current engine output is controlled as the accelerator pedal corresponding output, the process directly returns.

The above-described control action is performed for each shift operation.

Hereinafter, a description will be given of comparison between: changes in input shaft rotational speed and engine rotational speed in the case where the engine control during shifting gears is performed; and changes in input shaft rotational speed and engine rotational speed in a conventional technique.

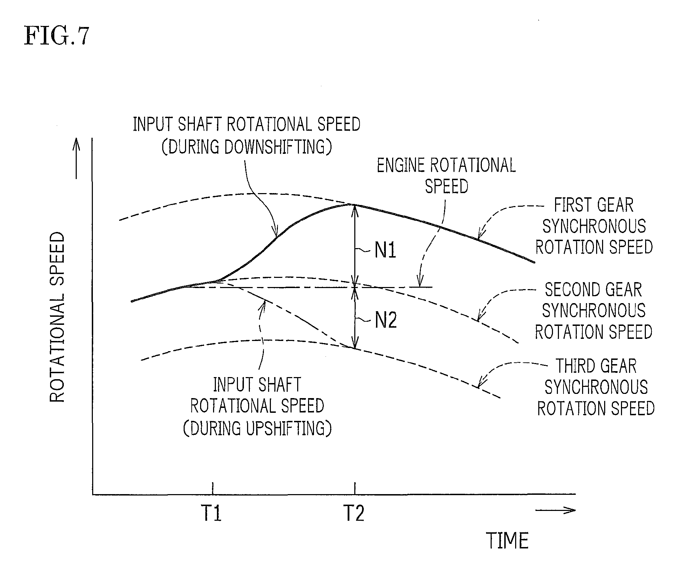

FIG. 7 is a graph illustrating changes in input shaft rotational speed and engine rotational speed in the case where the engine control during shifting gears is performed during the shift operation from the second gear. The solid line in the drawing denotes change in input shaft rotational speed during downshifting (during downshifting from the second gear to the first gear). The two-dot chain line in the drawing denotes change in input shaft rotational speed during upshifting (during upshifting from the second gear to the third gear). The one dot chain line in the drawing denotes change in engine rotational speed in the case where the engine output is controlled to be the before-shift gear Ne holding output. A timing T1 in the drawing denotes the time when the shift operation is started. A timing T2 denotes the time when the manual shift operation (the manual shift operation of the manual transmission MT) is completed (a state where the clutch device 6 is still in the release state).

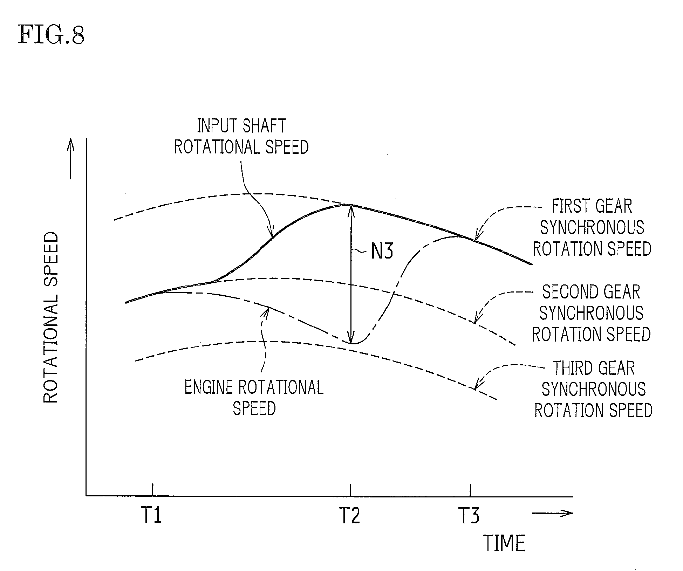

On the other hand, FIG 8 is a graph illustrating exemplary changes in input shaft rotational speed and engine rotational speed in the case where downshifting is performed from the second gear to the first gear in the conventional technique. The solid line in the drawing denotes change in input shaft rotational speed. The one dot chain line in the drawing denotes change in engine rotational speed. A timing T1 in the drawing denotes the time when the shift operation is started. A timing T2 denotes the time when the manual shift operation (the manual shift operation of the manual transmission MT) is completed. A reference sign T3 denotes the time when the shift operation is completed (the clutch device 6 is completely coupled).

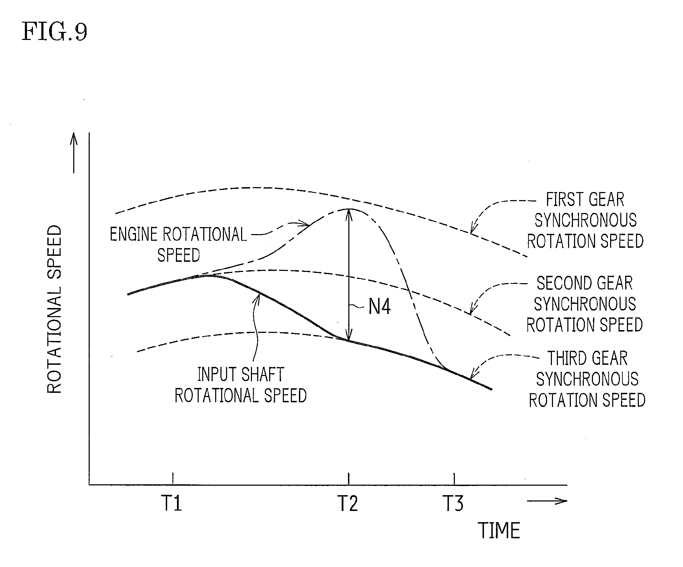

Additionally, FIG. 9 is a graph illustrating exemplary changes in input shaft rotational speed and engine rotational speed in the case where upshifting is performed from the second gear to the third gear in the conventional technique that performs automatic blipping during shifting gears. The solid line in the drawing denotes change in input shaft rotational speed. The one dot chain line in the drawing denotes change in engine rotational speed. A timing T1 in the drawing denotes the time when the shift operation is started. A timing T2 denotes the time when the manual shift operation (the manual shift operation of the manual transmission MT) is completed. A reference sign T3 denotes the time when the shift operation is completed (the clutch device 6 is completely coupled).

In the engine control during shifting gears, in downshifting as illustrated in FIG. 7, a reference sign N1 in the drawing denotes a deviation between input shaft rotational speed and engine rotational speed at the point when shifting to the first gear is completed in the transmission mechanism. In upshifting, a reference sign N2 in the drawing denotes a deviation between input shaft rotational speed and engine rotational speed at the point when shifting to the third gear is completed in the transmission mechanism. In this case, a deviation occurs between input shaft rotational speed and engine rotational speed in any of downshifting and upshifting. However, the deviations are comparatively small. The deviations provide small negative effects on the power transmission system when the clutch device 6 is coupled.

In contrast, as illustrated in FIG. 8, in the case where downshifting is performed from the second gear to the first gear in the conventional technique, the engine rotational speed decreases toward an idling engine speed during the manual shift operation along with the depression release operation of the accelerator pedal by the driver. A reference sign N3 in the drawing denotes a deviation between input shaft rotational speed and engine rotational speed at the point when shifting to the first gear is completed in the transmission mechanism. This causes a considerably large difference in rotational speed. Accordingly, when the clutch device 6 is engaged from this state, an excessive deceleration torque is input to the clutch device 6. This torque may provide a negative effect on the power transmission system including the clutch device 6.

As illustrated in FIG. 9, a reference sign N4 in the drawing denotes a deviation between input shaft rotational speed and engine rotational speed at the point when shifting to the third gear is completed in the transmission mechanism in the case where upshifting is performed from the second gear to the third gear in the conventional technique that performs automatic blipping during shifting gears (performs blipping even during upshifting). This causes a considerably large difference in rotational speed. Accordingly, when the clutch device 6 is engaged from this state, an excessive acceleration torque is input to the clutch device 6. Also in this case, this torque may provide a negative effect on the power transmission system including the clutch device 6.

As described above, the engine control during shifting gears according to this embodiment does not cause a large deviation between rotational speed of the input shaft IS and engine rotational speed after the manual shift operation in the case where the manual shift operation is any of downshifting operation and upshifting operation. This reduces a negative effect on the power transmission system when the clutch device 6 is coupled.

In the case where blipping is not performed during upshifting in the technique that performs automatic blipping during shifting gears in FIG. 9 so as to reduce the deviation between input shaft rotational speed and engine rotational speed, it is necessary to determine that the manual shift operation is downshifting operation or upshifting operation. Accordingly, a special sensor such as a shift position sensor is necessary for this determination. In contrast, it is not necessary to determine that the manual shift operation is downshifting operation or upshifting operation in the engine control during shifting gears according to this embodiment. Accordingly, disposing a sensor (a shift position sensor) is not necessary for detecting an operating position of the shift lever L. This reduces cost.

### (Modification 1)

Next, a description will be given of Modification 1. This modification corrects the engine rotational speed (the target engine rotational speed) adjusted with the before-shift gear Ne holding output in the above-described engine control during shifting gears.

In the case where the vehicle speed is changed during the period from the start of the shift operation until the clutch device 6 is coupled, the rotational speed of the input shaft IS at the time when the manual shift operation is completed or while the clutch device 6 is coupled is also changed along with this change of the vehicle speed with respect to the rotational speed without change in vehicle speed.

For example, in the case where the vehicle speed decreases during the period from the start of the shift operation until the clutch device 6 is coupled (for example, in the case where the manual shift operation takes a comparatively long time, in the case where the vehicle speed decreases due to running on an uphill road, or in similar case), the input shaft rotational speed at the point when the manual shift operation is completed also decreases along with the decrease of the vehicle speed (decreased compared with the case where the manual shift operation is completed while the vehicle speed is held constant). Therefore, correction is performed on the target engine rotational speed in the engine control during shifting gears (the engine rotational speed at the point when the shift operation is started) so as to reduce the deviation between input shaft rotational speed and engine rotational speed after completion of the manual shift operation. Accordingly, a final target engine rotational speed is set to be low. Subsequently, a correction amount for the final target engine rotational speed is obtained to be a correction amount for setting the engine rotational speed to the target engine rotational speed in the case where the engine rotational speed is assumed to be the current vehicle speed (the decreased vehicle speed) in the transmission gear before the shift operation is started. The engine rotational speed corrected with this correction amount is set as the final target engine rotational speed.

On the other hand, in the case where the vehicle speed increases during the period from the start of the shift operation until the clutch device 6 is coupled (for example, the vehicle speed increases because of running on a downhill road), the input shaft rotational speed at the point when the manual shift operation is completed also increases along with the increase of the vehicle speed (increases compared with the case where the manual shift operation is completed while the vehicle speed is held constant). Therefore, correction is performed on the target engine rotational speed in the engine control during shifting gears (the engine rotational speed at the point when the shift operation is started) so as to reduce the deviation between input shaft rotational speed and engine rotational speed after completion of the manual shift operation. Accordingly, the final target engine rotational speed is set to be high. Subsequently, a correction amount for the final target engine rotational speed is obtained to be a correction amount for setting the engine rotational speed to the target engine rotational speed in the case where the engine rotational speed is assumed to be the current vehicle speed (the increased vehicle speed) in the transmission gear before the shift operation is started. The engine rotational speed corrected with this correction amount is set as the final target engine rotational speed.

Here, the change in vehicle speed is calculated based on the output of the output rotational speed sensor 8C.

This modification allows appropriate adjustment of the target engine rotational speed following the change in vehicle speed. This does not cause a large deviation between input shaft rotational speed and engine rotational speed after the manual shift operation even in the case where the vehicle speed significantly changes during the manual shift operation. This reduces a negative effect on the power transmission system when the clutch device 6 is coupled.

### (Modification 2)

Next, a description will be given of Modification 2. This modification limits the execution conditions for the engine control during shifting gears to the case where the shift operation is performed from a specific transmission gear.

Specifically, the engine control during shifting gears is performed only when the shift operation is performed from a running state where the second gear (a transmission gear with the second highest transmission gear ratio among a plurality of transmission gears) is selected. That is, the engine control during shifting gears is not performed when the shift operation is performed from a running state where one of the third gear to the fifth gear is selected.

This control considers a situation where a large negative effect is especially likely to occur on the power transmission system when the clutch device 6 is coupled. That is, an excessive deceleration torque is input to the clutch device 6 when the clutch device 6 is coupled in the case where the shift operation to the first gear is performed by mistake when upshifting from the second gear to the third gear is intended to be performed in the manual transmission MT. This provides a negative effect on the power transmission system. This is because a gear ratio difference between the first gear and the second gear is larger than a gear ratio difference between other adjacent transmission gears. As described above, the engine control during shifting gears is performed only when the shift operation is performed from the second gear. With other transmission gears, the engine control during shifting gears is not performed. This prevents a feeling of strangeness when the shift operation is performed from the transmission gear other than the second gear (a feeling of strangeness due to the engine rotational speed that does not correspond to the depression amount of the accelerator pedal), and reduces a negative effect on the power transmission system when the shift operation is performed from the second gear (especially, a negative effect when downshifting is performed from the second gear to the first gear).

In a running state where the first gear (a transmission gear with the highest transmission gear ratio among the plurality of transmission gears) is selected, only upshifting operation is performed as the manual shift operation. In a running state where the sixth gear (a transmission gear with the lowest transmission gear ratio among the plurality of transmission gears) is selected, only downshifting operation is performed as the manual shift operation. Therefore, the engine control during shifting gears is not necessarily performed. For example, in the case where the shift operation is performed from the running state where the first gear is selected, it is preferred that the engine control during shifting gears be not performed to reduce the engine rotational speed close to the synchronous rotation speed of the second gear. In the case where the shift operation is performed from the running state where the sixth gear is selected, it is preferred that the engine control during shifting gears be not performed to increase the engine rotational speed close to the synchronous rotation speed of the fifth gear.

Here, in the case where the clutch device 6 is coupled, it can be determined whether or not the manual transmission MT is shifted to the second gear based on a ratio between: the engine rotational speed calculated based on the output signal of the crank position sensor 81, and the rotational speed of the output shaft detected by the output rotational speed sensor 8C.

### -Other Embodiments-

In the embodiment and respective modifications described above, a description has been given of the case where the present invention is applied to the synchromesh manual transmission with six forward gears and one reverse gear mounted on the FR vehicle. The present invention is not limited to this, and applicable to a manual transmission mounted on another type of vehicle such as a front-engine front-wheel drive (FF) vehicle. Additionally, the present invention is applicable to a transmission with the different number of gears (for example, a transmission with five forward gears) from that of the above transmission.

In the embodiment and respective modifications described above, a description has been given of the case where the present invention is applied to the vehicle where the gasoline engine 1 is mounted as the drive source. The present invention is not limited to this, and also applicable to a vehicle where a diesel engine is mounted or a hybrid vehicle where an engine (an internal combustion engine) and an electric machine (such as a motor for running, a motor-generator, or similar machine) are mounted.

Further, in the embodiment and respective modifications described above, the clutch switch 8B is used as a sensor for determining whether or not the clutch device 6 is released. The present invention is not limited to this, and may also employ a neutral switch for determining whether or not the shift lever L is moved to the neutral position, a shift stroke sensor for detecting the operating position of the shift lever L, a clutch stroke sensor for detecting the position of the clutch pedal 70, or a stroke sensor for detecting the slide position of the release bearing 67.

While in the embodiment and respective modifications described above one of the execution conditions for the engine control during shifting gears is the condition where "the vehicle is running", a condition where "the vehicle speed is equal to or more than a predetermined value (for example, 20 km/h)" is possible. That is, in the case where the vehicle speed is less than the predetermined value, there is low possibility of providing a negative effect on the power transmission system is provided when the clutch device 6 is coupled. Accordingly, the condition where the vehicle speed is equal to or more than the predetermined value is possible as the execution condition for the engine control during shifting gears.

In the engine control during shifting gears in the embodiment and respective modifications described above, the engine rotational speed coincides with the target rotational speed during the release operation of the clutch device 6, during the manual shift operation of the shift lever L, and during the coupling operation of the clutch device 6. The present invention is not limited to this insofar as the engine rotational speed coincides with the target rotational speed during the coupling operation of the clutch device 6 to reduce the negative effect on the power transmission system. Thus, this may be configured to allow the engine rotational speed to coincide with the target rotational speed only during the coupling operation of the clutch device 6.

### INDUSTRIAL APPLICABILITY

The present invention is applicable to an engine rotational speed control when a clutch device is coupled in a vehicle where a manual transmission and the clutch device are mounted.

### DESCRIPTION OF REFERENCE SIGNS

- 1: engine (drive source)
- 33: throttle valve
- 34: throttle motor
- 35: inj ector
- 6: clutch device
- 8A: input rotational speed sensor
- 8B: clutch switch
- 8C: output rotational speed sensor
- 9: ECU
- MT: manual transmission
- L: shift lever

## Claims

1. A control apparatus for a vehicle, comprising
a clutch device configured to switch a coupled state and a release state to transmit and cut off a drive force from a drive source;
a manual transmission configured to select any of a plurality of transmission gears based on a manual shift operation by a driver when the clutch device is in the release state; and
a rotational speed control unit configured to perform rotational speed control during shifting gears so as to control the drive source to set a rotational speed of the drive source at a time when a shift operation is started or before a shift operation is started as a target rotational speed at least during a period where the clutch device in the release state is operated to the coupled state among operation periods of the clutch device and the manual transmission.

2. The control apparatus for the vehicle according to claim 1, wherein
the rotational speed control unit is configured to control the drive source to set a rotational speed of the drive source at a time when a shift operation is started or before a shift operation is started as a target rotational speed during a period from a start of a shift operation to set the clutch device in the release state until the clutch device becomes the coupled state.

3. The control apparatus for the vehicle according to claim 1, wherein
an output of the drive source required for holding the rotational speed of the drive source at the target rotational speed is compared with an output of the drive source required by the driver so as to control to set the higher output to the output of the drive source.

4. The control apparatus for the vehicle according to claim 1, wherein
the rotational speed control unit is configured to:
correct the target rotational speed of the drive source to a decreasing side in a case where an output shaft rotational speed of the manual transmission or a vehicle speed decreases during a period from a start of a shift operation to set the clutch device in the release state until the clutch device becomes the coupled state; and
correct the target rotational speed of the drive source to an increasing side in a case where an output shaft rotational speed of the manual transmission or a vehicle speed increases during the period from the start of the shift operation to set the clutch device in the release state until the clutch device becomes the coupled state.

5. The control apparatus for the vehicle according to any one of claims 1 to 4, wherein
the rotational speed control unit is configured to perform the rotational speed control during shifting gears only when a shift operation is performed in a state where a transmission gear with a second highest transmission gear ratio is selected among the plurality of transmission gears of the manual transmission.

6. The control apparatus for the vehicle according to any one of claims 1 to 5, wherein
the rotational speed control unit is configured to perform the rotational speed control during shifting gears after completion of warming-up of the vehicle.

7. The control apparatus for the vehicle according to any one of claims 1 to 6, wherein
the rotational speed control unit is configured to perform the rotational speed control during shifting gears in a case where a vehicle speed is equal to or more than a predetermined value.
